# EUROPÄISCHE PATENTANMELDUNG

(11) **EP 1 469 488 A1**
(43) Veröffentlichungstag der Anmeldung: **20.10.2004**
(21) Anmeldenummer: 04008516.9
(22) Anmeldetag: 08.04.2004
(51) Int. Cl.: H01F 27/32, H01F 41/12

(54) **Elektrisches Bauteil und Verfahren zu dessen Herstellung**

(30) Priorität: 17.04.2003 DE 10317739
(71) Anmelder: Bartec GmbH, 97980 Bad Mergentheim (DE)
(72) Erfinder: Barlian, Reinhold, 97980 Bad Mergentheim (DE); Michelbach, Thomas, 97922 Lauda-Königshofen (DE); Lösch, Hans-Martin, 97084 Würzburg (DE)

(57) **Zusammenfassung**

Elektrisches Bauteil mit einem auf einem Grundkörper vorgesehenen elektrischen oder elektronischen Bauelement und einer letzteres dicht und hohlraumfrei umschließenden Kapselung, deren Matenalgefüge mit dem Materialgefüge des Grundkörpers innig schmelzverbunden ist.

## Beschreibung

Die Erfindung betrifft ein elektrisches Bauteil mit mindestens einem elektrischen oder elektronischen Bauelement und ein Verfahren zur Herstellung eines solchen Bauteils.

Die Aufgabe der Erfindung besteht darin, ein elektrisches Bauteil und ein Herstellungsverfahren dafür zu schaffen, wobei mit einfachen Mitteln eine kompakte, spaltfreie und hermetisch dichte Isolierung sowie hohe Funktionstüchtigkeit des Bauteils erzielt wird, das in extrem gefährdeten und/oder sensiblen Bereichen einsetzbar ist.

Diese Aufgabe wird erfindungsgemäß durch die Merkmale der Ansprüche 1 und 20 gelöst.

Bevorzugte Ausgestaltungen und Weiterbildungen der Erfindung sind durch die Merkmale der Unteransprüche gekennzeichnet.

Weitere Vorteile und wesentliche Einzelheiten der Erfindung sind der nachfolgenden Beschreibung und der Zeichnung zu entnehmen, die in schematischer Darstellung bevorzugte Ausführungsformen als Beispiel zeigt. Es stellen dar:
- FIG. 1: ein erfindungsgemäßes Bauteil mit einer als Steckerstift ausgebildeten Elektrospule, die in eine als Steckerbuchse ausgebildete Elektrospule eingesteckt ist, in einer geschnittenen Seitenansicht,

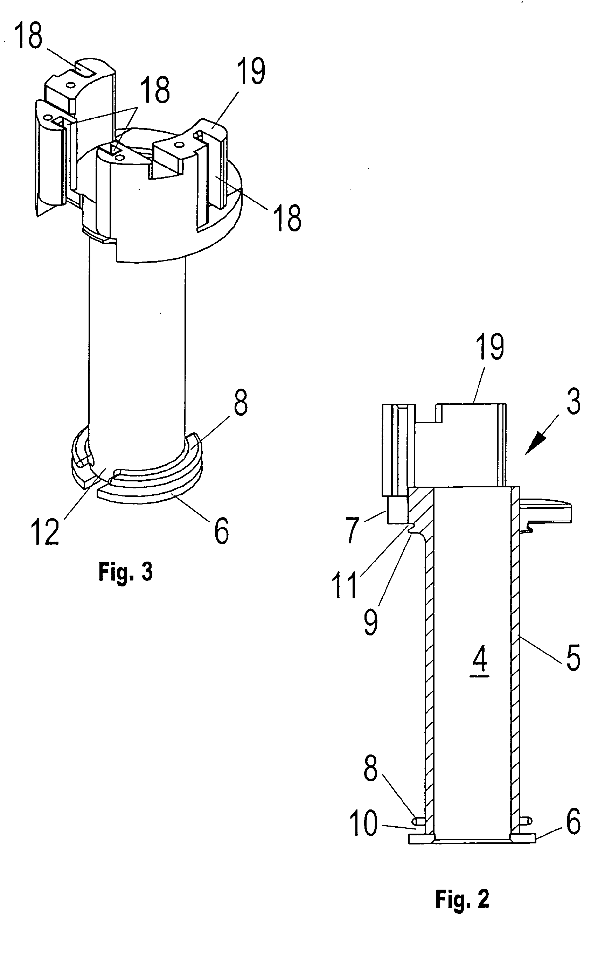

- FIG. 2: den Grundkörper des Steckerstifts der FIG. 1 in einer geschnittenen Seitenansicht,
- FIG. 3: den Grundkörper des Steckerstifts der FIG. 2 in einer Gesamtansicht,

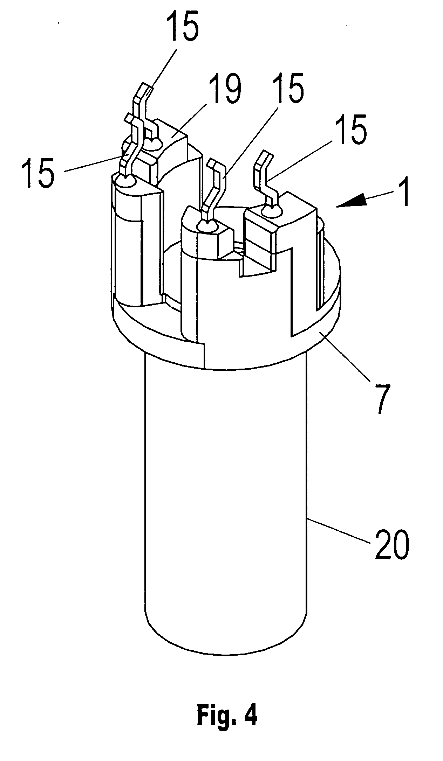

- FIG. 4: die fertige Steckerstift-Elektrospule der FIG. 1 in einer Gesamtansicht,

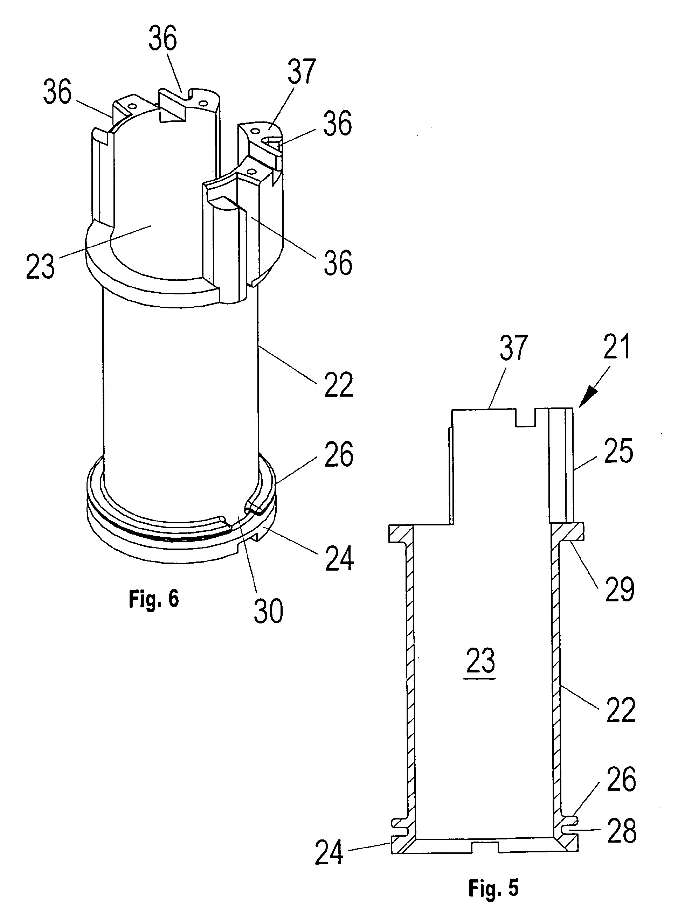

- FIG. 5: den Grundkörper der Steckerbuchse der FIG. 1 in einer geschnittenen Seitenansicht,
- FIG. 6: den Grundkörper der Steckerbuchse der FIG. 5 in einer Gesamtansicht und

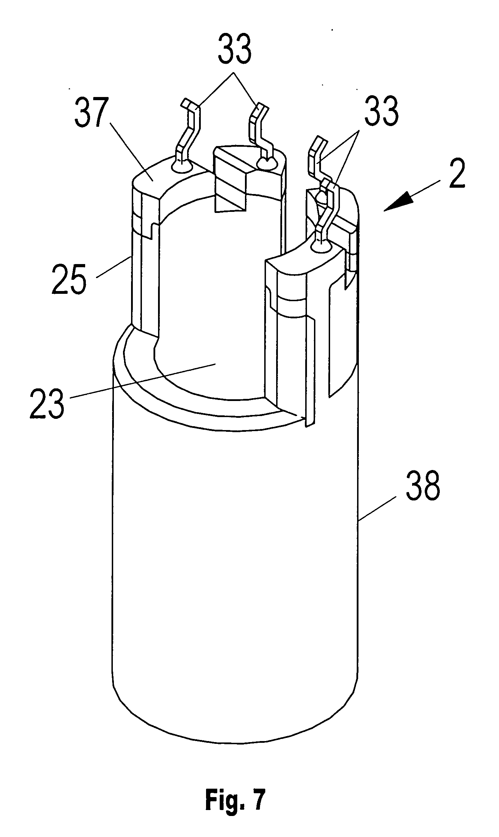

- FIG. 7: die fertige Steckerbuchsen-Elektrospule der FIG. 1 in einer Gesamtansicht.

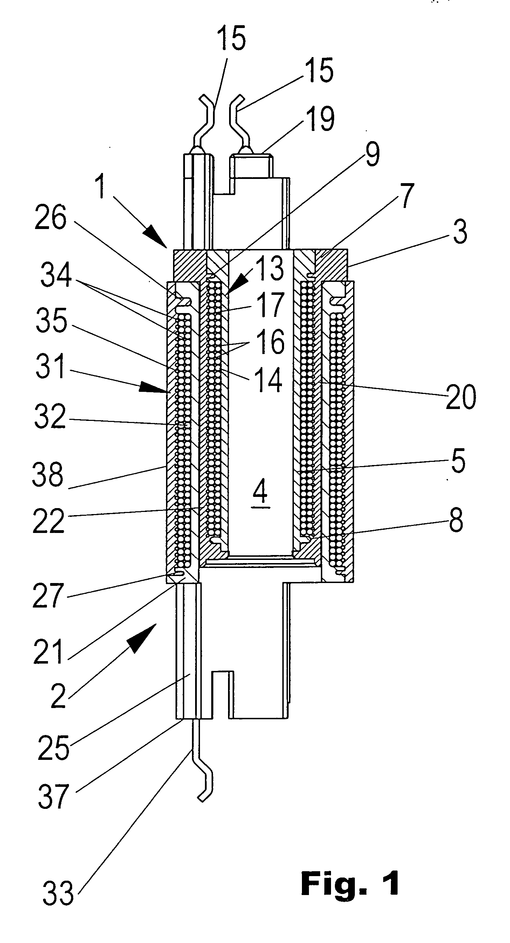

Das in der Zeichnung dargestellte erfindungsgemäße Bauteil weist eine Elektrospule in Form eines Steckerstifts 1 auf, der gemäß der Darstellung in FIG. 1 in eine andere Elektrospule koaxial einsteckbar, die in Form einer Steckerbuchse 2 ausgebildet ist.

Der Steckerstift 1 besitzt einen Grundkörper 3, der einen mit einer Längsbohrung 4 versehenen Zylinderteil 5 aufweist. An dem einen Endbereich des Zylinderteils 5 befindet sich ein Begrenzungsbund 6 und an dem gegenüberliegenden anderen Endbereich ist ein Anschlusskopf 7 angeordnet. Außerdem besitzt der Grundkörper 3 zwei vorstehende Rippen 8, 9, wobei die eine Rippe 8 an dem Zylinderteil 5 in einem geringen Abstand zum Begrenzungsbund 6 und die andere Rippe 9 in einem geringen Abstand zum Anschlusskopf 7 angeordnet ist. Dadurch ist sowohl zwischen dem Begrenzungsbund 6 und der Rippe 8 als auch zwischen dem Anschlusskopf 7 und der Rippe 9 je ein Hinterschnitt 10, 11 gebildet ist. Die Rippen 8, 9 können zweckmäßig als Teilkreissegmente ausgeführt sein und mindestens eine Freisparung 12 aufweisen.

Der Grundkörper 3 wird mit dem Zylinderteil 5, dem Begrenzungsbund 6, dem Anschlusskopf 7 und den Rippen 8, 9 in einem Formwerkzeug einer Spritzgießmaschine materialeinheitlich einstückig als Spritzgussteil hergestellt. Dieses Spritzgussteil besteht aus einem thermoplastischen Kunststoffmaterial, zum Beispiel Ultramid, dessen Schmelztemperatur beim Spritzgießen etwa 260 °C betragen kann, und das nach dem Spritzvorgang zu einem harten Kunststoff erstarrt. Auf dem Grundkörper 3 ist ein elektrisches Bauelement angeordnet, das beim vorliegenden Ausführungsbeispiel als Spulenwicklung 13 ausgebildet ist, deren Spulendraht 14 zweckmäßig direkt auf den Zylinderteil 5 gewickelt ist. Die Enden des Spulendrahtes 14 werden an Anschlussstiften 15 kontaktiert, so dass eine einwandfreie Verbindung gewährleistet ist. Bei dem dargestellten Steckerstift 1 kann es günstig sein, zunächst eine Hauptwicklung 16 auf den Grundkörper 3 aufzubringen, die vorzugsweise zwei übereinander gewickelte Lagen aufweisen kann. Auf diese Hauptwicklung 16 kann dann zusätzlich eine sogenannte Hilfswicklung 17 aufgebracht werden, die bevorzugt nur einlagig ist. Für die Kontaktierung der insgesamt vier Spulendrahtenden sind somit auch vier Anschlussstifte 15 vorgesehen. In dem Anschlusskopf 7 des Grundkörpers 3 befinden sich vier Kanäle 18, in die die mit den Spulendrahtenden verbundenen Anschlussstifte 15 eingelegt werden, und zwar so, dass je ein Endteil der Anschlussstifte 15 an einer Stirnseite 19 des Anschlusskopfes 7 herausragt, so dass an diese Endteile der Anschlussstifte 15 hier nicht dargestellte elektrische Leiter angeschlossen werden können.

Der so mit den Wicklungen 16, 17 und den Anschlussstiften 15 versehene Grundkörper 3 wird nun in ein anderes Formwerkzeug der Spritzgießmaschine eingelegt und mit einem thermoplastischen Kunststoffmaterial umspritzt, das vorzugsweise derselben Werkstoffgruppe angehört wie das Kunststoffmaterial des Grundkörpers 3 (z.B. Ultramid). Allerdings unterscheiden sich die beiden Kunststoffmaterialen dadurch, dass das für die Umspritzung der Spulenwicklungen 16, 17 vorgesehene zweite Kunststoffmaterial eine höhere Schmelztemperatur aufweist als das für die Herstellung des Grundkörpers 3 verwendete Kunststoffmaterial. Bevorzugt kann die Schmelztemperatur des zweiten Kunststoffmaterials etwa 20 bis 30 °C höher sein als die Schmelztemperatur des Grundkörpers 3 und ungefähr 280 bis 290 °C betragen. Beim Spritzgießvorgang mit dem höher schmelzenden Kunststoffmaterial füllt letzteres alle Freiräume aus und dringt dabei auch in die Hinterschnitte 10, 11, die Freisparung 12 und die Kanäle 18 ein. Auf Grund der hohen Wärmeenergie wird das Kunststoffmaterial des Grundkörpers 3 insbesondere im Bereich der Rippen 8, 9, des Begrenzungsbundes 6, des Anschlusskopfes 7 und der Wand des Zylinderteils 5 derart angeschmolzen, dass eine innige Verschmelzung der beiden Kunststoffmaterialien eintritt und ein homogener Verbund der Materialgefüge erzielt wird. Nach dem Spritzvorgang erstarrt das höher schmelzende Kunststoffmaterial ebenfalls zu einem harten Kunststoff, so dass eine hermetisch dichte Kapselung 20 gegeben ist, in der die Wicklungen 16, 17 sowie die Anschlussstifte 15 spalt- und hohlraumfrei eingebettet sind. Durch die Hinterschnitte 10, 11 und Rippen 8, 9 wird zudem eine hohe mechanische Verbundfestigkeit erzielt, durch die gewährleistet ist, dass beim Erstarren des Kunststoffmaterials auftretende Schwundkräfte bzw. mechanische Spannungen sicher aufgefangen und Rissbildungen vermieden werden.

Die Steckerbuchse 2 ist im Wesentlichen wie der Steckerstift 1 ausgeführt und weist einen Grundkörper 21 auf, der einen Zylinderteil 22 mit einer Längsbohrung 23 besitzt. An dem einen Endbereich des Zylinderteils 22 ist ein Begrenzungsbund 24 vorgesehen und an dem gegenüberliegenden anderen Endbereich befindet sich ein Anschlusskopf 25. Eine Rippe 26 ist in einem geringen Abstand zum Begrenzungsbund 24 und eine andere Rippe 27 ist ebenfalls in einem geringen Abstand zum Anschlusskopf 25 angeordnet, so dass Hinterschnitte 28, 29 gebildet sind. Die Rippen 28, 29 können vorzugsweise als Teilkreissegmente ausgebildet sein und mindestens eine Freisparung 30 aufweisen. Die Längsbohrung 23 des Grundkörpers 21 weist einen Durchmesser auf, der nur etwas größer ist als der Durchmesser der kreiszylindrischen Kapselung 20 des Steckerstifts 1, so dass letzterer beim Einstecken in die Steckerbuchse 2 in deren Längsbohrung 23 eng und weitgehend spielfrei gelagert ist.

Der Grundkörper 21 wird mit dem Zylinderteil 22, dem Begrenzungsbund 24, dem Anschlusskopf 25 und den Rippen 26, 27 in einem Formwerkzeug einer Spritzgießmaschine materialeinheitlich einstückig als Spritzgussteil hergestellt. Dieses Spritzgussteil besteht aus einem thermoplastischen Kunststoffmaterial, zum Beispiel Ultramid, dessen Schmelztemperatur beim Spritzgießen etwa 260 °C betragen kann, und das nach dem Spritzvorgang zu einem harten Kunststoff erstarrt. Auf dem Grundkörper 21 ist ein elektrisches Bauelement angeordnet, das beim vorliegenden Ausführungsbeispiel als Spulenwicklung 31 ausgebildet ist, deren Spulendraht 32 zweckmäßig direkt auf den Zylinderteil 22 gewickelt ist. Die Enden des Spulendrahtes 32 werden an Anschlussstiften 33 kontaktiert, so dass eine einwandfreie Verbindung gewährleistet ist. Bei der dargestellten Steckerbuchse 2 kann es günstig sein, zunächst eine Hauptwicklung 34 auf den Grundkörper 21 aufzubringen, die vorzugsweise zwei übereinander gewickelte Lagen aufweisen kann. Auf diese Hauptwicklung 34 kann dann zusätzlich eine sogenannte Hilfswicklung 35 aufgebracht werden, die bevorzugt nur einlagig ist. Für die Kontaktierung der insgesamt vier Spulendrahtenden sind somit auch vier Anschlussstifte 33 vorgesehen. In dem Anschlusskopf 25 des Grundkörpers 21 befinden sich vier Kanäle 36, in die die mit den Spulendrahtenden verbundenen Anschlussstifte 33 eingelegt werden, und zwar so, dass je ein Endteil der Anschlussstifte 33 an einer Stirnseite 37 des Anschlusskopfes 25 herausragt, so dass an diese Endteile der Anschlussstifte 33 elektrische Leiter angeschlossen werden können, die hier nicht dargestellt worden sind.

Der so mit den Wicklungen 34, 35 und den Anschlussstiften 33 versehene Grundkörper 21 wird dann in ein anderes Formwerkzeug der Spritzgießmaschine eingelegt und mit einem thermoplastischen Kunststoffmaterial umspritzt, das vorzugsweise derselben Werkstoffgruppe angehört wie das Kunststoffmaterial des Grundkörpers 21 (z.B. Ultramid). Allerdings unterscheiden sich die beiden Kunststoffmaterialen dadurch, dass das für die Umspritzung der Spulenwicklungen 34, 35 vorgesehene zweite Kunststoffmaterial eine höhere Schmelztemperatur aufweist als das für die Herstellung des Grundkörpers 21 verwendete Kunststoffmaterial. Bevorzugt kann die Schmelztemperatur des zweiten Kunststoffmaterials etwa 20 bis 30 °C höher sein als die Schmelztemperatur des Grundkörpers 21 und ungefähr 280 bis 290 °C betragen. Beim Spritzgießvorgang mit dem höher schmelzenden Kunststoffmaterial füllt letzteres alle Freiräume aus und dringt dabei auch in die Hinterschnitte 28, 29, die Freisparung 30 und die Kanäle 36 ein. Auf Grund der hohen Wärmeenergie wird das Kunststoffmaterial des Grundkörpers 21 insbesondere im Bereich der Rippen 26, 27, des Begrenzungsbundes 24, des Anschlusskopfes 25 und der Wand des Zylinderteils 22 derart angeschmolzen, dass eine innige Verschmelzung der beiden Kunststoffmaterialien eintritt und ein homogener Verbund der Materialgefüge erzielt wird. Nach dem Spritzvorgang erstarrt das höher schmelzende Kunststoffmaterial ebenfalls zu einem harten Kunststoff, so dass eine hermetisch dichte Kapselung 38 gegeben ist, in der die Wicklungen 34, 35 sowie die Anschlussstifte 33 spalt- und hohlraumfrei eingebettet sind. Durch die Hinterschnitte 28, 29 und Rippen 26, 27 wird zudem eine hohe mechanische Verbundfestigkeit erzielt, durch die gewährleistet ist, dass beim Erstarren des Kunststoffmaterials auftretende Schwundkräfte bzw. mechanische Spannungen sicher aufgefangen und Rissbildungen vermieden werden.

Wie der Zeichnung zudem zu entnehmen ist, kann es günstig sein, beim Steckerstift 1 den Durchmesser des Anschlusskopfes 7 größer auszubilden als den Durchmesser der Spulenkapselung 20. Der Durchmesser des Anschlusskopfes 7 kann dabei ungefähr gleich oder etwas kleiner sein als der Durchmesser der Kapselung 38 der Steckerbuchse 2. Außerdem kann es vorteilhaft sein, die Kapselung 20 des Steckerstifts 1 und die Kapselung 38 der Steckerbuchse 2 axial etwa gleich lang zu gestalten.

Die erfindungsgemäßen Bauteile können auf Grund ihrer hermetisch dichten und absolut spaltfreien Kapselungen vorteilhaft in explosionsgefährdeten Bereichen oder anderen kritischen Umgebungen eingesetzt werden und gewährleisten eine hohe Sicherheit. Durch das magnetische Feld der dem Steckerstift 1 zugehörigen Spulenwicklung kann ein magnetisches Feld in der Spulenwicklung der Steckerbuchse 2 induziert werden oder umgekehrt, so dass eine galvanisch getrennte Stromübertragung möglich ist. Eine gemäß der Erfindung hergestellte galvanisch getrennte Stromübertragungseinrichtung kann in explosionsgefährdeter Umgebung ohne vorheriges Abschalten der Stromkreise entkuppelt werden, da keinerlei Funkenbildung entsteht.

## Patentansprüche

1. Elektrisches Bauteil, umfassend ein elektrisches oder elektronisches Bauelement, einen Grundkörper (3, 21), der aus einem harten, thermoplastischen Kunststoffmaterial besteht, auf dem das Bauelement angeordnet ist, und eine das Bauelement dicht umschließende Kapselung (20, 38), die aus einem zweiten harten, thermoplastischen Kunststoffmaterial besteht, dessen Schmelztemperatur höher ist als die Schmelztemperatur des Grundkörpers (3, 21) und dessen Materialgefüge mit dem Materialgefüge des Grundkörpers (3, 21) inniglich schmelzverbunden ist, wobei das Bauelement spalt- und hohlraumfrei eingebettet ist.

2. Bauteil nach vorstehendem Anspruch, **dadurch gekennzeichnet, dass** das Bauelement eine elektrische Spulenwicklung (13, 31) ist, deren Spulendraht (14, 32) direkt auf dem Grundkörper (3, 21) angeordnet ist.

3. Bauteil nach einem der vorstehenden Ansprüche, **dadurch gekennzeichnet, dass** der Grundkörper (3, 21) einen die Spulenwicklung (13, 31) tragenden Zylinderteil (5, 22) aufweist.

4. Bauteil nach einem der vorstehenden Ansprüche, **dadurch gekennzeichnet, dass** der Zylinderteil (5, 22) des Grundkörpers (3, 21) an einem Endbereich einen Begrenzungsbund (6, 24) und an dem gegenüberliegenden anderen Endbereich einen Anschlusskopf (7, 25) aufweist.

5. Bauteil nach einem der vorstehenden Ansprüche, **dadurch gekennzeichnet, dass** der Grundkörper (3, 21) mindestens eine vorstehende Rippe (8, 9, 26, 27) und mindestens einen Hinterschnitt (10, 11, 28, 29) aufweist, in dem das Kunststoffmaterial der Kapselung (20, 38) in Eingriff ist.

6. Bauteil nach einem der vorstehenden Ansprüche, **dadurch gekennzeichnet, dass** die Rippen (8, 9 26, 27) und Hinterschnitte (10, 11, 28, 29) am Zylinderteil (5, 22) des Grundkörpers (3, 21) nahe dem Begrenzungsbund (6, 24) und nahe dem Anschlusskopf (7, 25) ausgebildet sind.

7. Bauteil nach einem der vorstehenden Ansprüche, **dadurch gekennzeichnet, dass** die Rippen (8, 9, 26, 27) mindestens eine Freisparung (12, 30) aufweisen.

8. Bauteil nach einem der vorstehenden Ansprüche, **dadurch gekennzeichnet, dass** der Anschlusskopf (7, 25) des Grundkörpers (3, 21 ) mindestens einen, vorzugsweise vier Kanäle (18, 36) aufweist, in denen je ein mit einem Ende des Spulendrahtes (14, 32) kontaktierter Anschlussstift (15, 33) hohlraumfrei eingebettet ist.

9. Bauteil nach einem der vorstehenden Ansprüche, **dadurch gekennzeichnet, dass** ein Endteil des Anschlussstiftes (15, 33) den Anschlusskopf (7, 25) an einer dem Zylinderteil (5, 22) abgewandten Stirnseite (19, 37) überragt.

10. Bauteil nach einem der vorstehenden Ansprüche, **dadurch gekennzeichnet, dass** die Spulenwicklung (13, 31) eine Hauptwicklung (16, 34) und eine Hilfswicklung (17, 35) aufweist.

11. Bauteil nach einem der vorstehenden Ansprüche, **dadurch gekennzeichnet, dass** die Hauptwicklung (16, 34) auf den Zylinderteil (5, 22) des Grundkörpers (3, 21) und die Hilfswicklung (17, 35) auf die Hauptwicklung (16, 34) gewickelt ist.

12. Bauteil nach einem der vorstehenden Ansprüche, **dadurch gekennzeichnet, dass** der Spulendraht (14, 32) der Hauptwicklung (16, 34) aus zwei übereinander gewickelten Lagen und die Hilfswicklung (17, 35) aus einer einzigen Wickellage besteht.

13. Bauteil nach einem der vorstehenden Ansprüche, **dadurch gekennzeichnet, dass** der Grundkörper (3, 21) eine axiale Längsbohrung (4, 23) aufweist.

14. Bauteil nach einem der vorstehenden Ansprüche, **dadurch gekennzeichnet, dass** die Kapselung (20, 38) eine kreiszylindrische Außenfläche aufweist.

15. Bauteil nach einem der vorstehenden Ansprüche, **dadurch gekennzeichnet, dass** es mit dem die Längsbohrung (4, 23) aufweisenden Grundkörper (3, 21), der hohlraumfrei eingebetteten Spulenwicklung (13, 31) mit den zugehörigen Anschlussstiften (15) und der mit dem Grundkörper (3, 21) innig verschmolzenen Kapselung (20, 38) als Steckerstift (1) und/oder Steckerbuchse (2) ausgebildet ist.

16. Bauteil nach einem der vorstehenden Ansprüche, **dadurch gekennzeichnet, dass** der Steckerstift (1) in die Steckerbuchse (2) axial einsteckbar ist.

17. Bauteil nach einem der vorstehenden Ansprüche, **dadurch gekennzeichnet, dass** der Durchmesser der kreiszylindrischen Kapselung (20) des Steckerstifts (1) nur etwas kleiner ist als der Innendurchmesser der in dem Grundkörper (21) der Steckerbuchse (2) befindlichen Längsbohrung (23).

18. Bauteil nach einem der vorstehenden Ansprüche, **dadurch gekennzeichnet, dass** der Anschlusskopf (7) des Steckerstifts (1) im Durchmesser größer ist als dessen Spulenkapselung (20) und etwa gleich dem Durchmesser der Spulenkapselung (38) der Steckerbuchse (2) ist.

19. Bauteil nach einem der vorstehenden Ansprüche, **dadurch gekennzeichnet, dass** die Spulenkapselung (20) des Steckerstifts (1) und die Spulenkapselung (38) der Steckerbuchse (2) axial etwa gleich lang sind.

20. Verfahren zur Herstellung des elektrischen Bauteils nach einem der vorstehenden Ansprüche, **dadurch gekennzeichnet, dass** der Grundkörper (3, 21) in einem Formwerkzeug einer Spritzgießmaschine aus einem thermoplastischen Kunststoffmaterial geformt wird, das nach dem Spritzvorgang zu einem harten Kunststoff erstarrt, dass das elektrische oder elektronische Bauelement auf den harten Grundkörper (3, 21) aufgebracht wird, dass der Grundkörper (3, 21) mit dem Bauelement in ein anderes Formwerkzeug der Spritzgießmaschine eingelegt und mit einem anderen thermoplastischen Kunststoffmaterial, dessen Schmelztemperatur höher ist als die Schmelztemperatur des Grundkörpermaterials, spalt- und hohlraumfrei umspritzt wird, derart, dass das Kunststoffmaterial des Grundkörpers (3, 21) von der Wärmeenergie des höher schmelzenden Kunststoffmaterials angeschmolzen wird, wobei die bezüglich der Schmelztemperatur unterschiedlichen Kunststoffmaterialien miteinander innig verschmelzen, und dass das höher schmelzende Kunststoffmaterial nach dem Spritzvorgang zu einer harten Kunststoffkapselung (20, 38) erstarrt.
